# EUROPEAN PATENT APPLICATION

(11) **EP 4 659 585 A1**
(43) Date of publication of application: **10.12.2025**
(21) Application number: 24840686.0
(22) Date of filing: 05.11.2024
(51) Int. Cl.: A22C 17/08, A22B 5/00, B08B 3/02, B08B 3/04

(54) **AUTOMATIC CARCASS WASHING SYSTEM**

(30) Priority: 06.02.2024 KR 20240018334
(71) Applicant: Robos Co.,Ltd, Daegu 43018 (KR)
(72) Inventor: JUNG, Jae Hoon, Jinju-si, Gyeongsangnam-do 52700 (KR); PARK, Jong Chan, Dalseong-gun, Daegu 42995 (KR)
(74) Representative: Germain Maureau
(86) International application number: PCT/KR2024/017325
(87) International publication number: WO 2025/170148

(57) **Abstract**

One embodiment of the present invention provides an automated carcass washing system which washes carcasses bisected into a first carcass and a second carcass and moved while hanging on a hanger, which includes a sensor part which detects bisected carcasses and collects scan information including sizes and curvatures of the bisected carcasses, a robot arm part which moves along a movement path calculated on the basis of the scan information, a washing module part including a plurality of washing nozzles which are connected to an end portion of the robot arm part, move along with the robot arm part, and spray the washing water toward the bisected carcasses, and a control unit which calculates the movement path of the robot arm part on the basis of the collected scan information and controls movement of the robot arm part and spraying of the washing water of the washing module part.

## Description

### Technical Field

The present invention relates to an automated carcass washing system, and more specifically, to an automated carcass washing system for automatically washing bisected carcasses at the same time.

### Background Art

In a main process, a washing operation is performed in a slaughterhouse to remove foreign matter such as bone fragments remaining after a carcass is bisected. In the conventional carcass washing operation, a worker visually checks a carcass and performs the washing operation of spraying washing water to a required portion to remove foreign matter.

However, when the worker directly sprays the washing water to remove the foreign matter as described above, there is a problem that a work result varies according to a skill level of the worker. In addition, since the worker should perform repeated operations using arms, hands, and the like during the washing operation, there are many cases of suffering from musculoskeletal disorders.

In addition, since workers should work while continuously watching eviscerated and head-cut carcasses, many workers suffer from post-traumatic stress.

In addition, since the carcass washing operation is performed using the washing water sprayed at a pressure of 30 to 40 psi, the worker may be seriously injured by the washing water during the washing operation.

In addition, in a joint market in which a work rate is high, since, for example, the maximum of 6000 carcasses should be washed per a day, when a large number of washing operations are performed, there is a problem that the washing operations are inaccurately performed.

Accordingly, an automated carcass washing system is required to be used instead of a manual method.

### Related Art

Korean Patent Registration No. 10-2364290 (February 14, 2022)

### Technical Problem

The present invention is intended to address the above-described problems of the conventional technique and directed to providing an automated carcass washing system for automatically washing bisected carcasses at the same time.

### Technical Solution

In order to achieve the above purpose, one aspect of the present invention provides an automated carcass washing system which washes carcasses bisected into a first carcass and a second carcass and moved while hanging on a hanger, which includes a sensor part which detects bisected carcasses and collects scan information including sizes and curvatures of the bisected carcasses, a robot arm part which moves along a movement path calculated on the basis of the scan information, a washing module part including a plurality of washing nozzles which are connected to an end portion of the robot arm part, move along with the robot arm part, and spray the washing water toward the bisected carcasses, and a control unit which calculates the movement path of the robot arm part on the basis of the collected scan information and controls movement of the robot arm part and spraying of the washing water of the washing module part.

According to one embodiment of the present invention, the washing module part may include a connecting part connected to the end portion of the robot arm part, a first washing part extending from the connecting part in one direction and including one or more washing nozzles, a second washing part extending from the connecting part in the other direction and including one or more washing nozzles, and a central washing part extending from the connecting part in a central direction and including one or more washing nozzles, wherein the first washing part may perform a washing operation on an outer surface of the first carcass, the second washing part may perform a washing operation on an outer surface of the second carcass, and the central washing part may perform a washing operation on inner surfaces of the first carcass and the second carcass.

According to one embodiment of the present invention, the first washing part may include a first lateral washing pipe part extending from the connecting part in the one direction and a first longitudinal washing pipe part bent from one end of the first lateral washing pipe part and disposed to face the central washing part, and the second washing part may include a second lateral washing pipe part extending from the connecting part in the other direction and a second longitudinal washing pipe part bent from one end of the second lateral washing pipe part and disposed to face the central washing part.

According to one embodiment of the present invention, the first washing part may further include a first distancing guide which is coupled to the first longitudinal washing pipe part and maintains a distance such that the first carcass does not block an inlet of the washing nozzle while reducing movement of the first carcass due to a washing repulsive force, and the second washing part further may include a second distancing guide which is coupled to the second longitudinal washing pipe part and maintains a distance such that the second carcass does not block an inlet of the washing nozzle while reducing movement of the second carcass due to a washing repulsive force.

According to one embodiment of the present invention, a distance between the first longitudinal washing pipe part and the central washing part may be greater than a distance between the first distancing guide and the central washing part, and a distance between the second longitudinal washing pipe part and the central washing part may be greater than a distance between the second distancing guide and the central washing part.

According to one embodiment of the present invention, the robot arm part may include a waterproof cover which prevents the washing water from being introduced into an apparatus.

According to one embodiment of the present invention, the washing module part may be coupled to the robot arm part moving along the movement path calculated by the control unit and may wash the outer surface and the inner surface of the first carcass and the outer surface and the inner surface of the second carcass at the same time while moving vertically.

### Advantageous Effects

In accordance with one aspect of the present invention, in an automated carcass washing system according to the present invention, a washing module part including a first washing part, a second washing part, and a central washing part can wash a first carcass and a second carcass, which are bisected, at the same time, thereby significantly reducing a working time.

In addition, in an automated carcass washing system according to the present invention, a washing module part connected to a robot arm part precisely washes a first carcass and a second carcass, which are bisected, while moving an optimum path, thereby reducing the waste of washing water and securing uniform washing quality.

Effects of the present invention are not limited to the above-described effects and should be understood that the effects of the present invention include any effect which may be inferred from the configuration of the invention described in the detailed description and the claims of the present invention.

### Description of Drawings

FIG. 1 is a perspective view illustrating an automated carcass washing system according to one embodiment of the present invention.
FIG. 2 is a block diagram illustrating the automated carcass washing system according to one embodiment of the present invention.
FIG. 3 is a partially enlarged view illustrating the automated carcass washing system according to one embodiment of the present invention.
FIG. 4 is a plan view illustrating a washing module part according to one embodiment the present invention.
FIG. 5 is a perspective view illustrating the washing module part according to one embodiment the present invention.
FIG. 6 is a front view illustrating the washing module part according to one embodiment the present invention.
FIGS. 7 and 8 are views illustrating a use state of the automated carcass washing system according to one embodiment of the present invention.

### Modes of the Invention

Hereinafter, the present invention will be described with reference to the accompanying drawings. However, the present invention may be implemented in several different embodiments and is not limited to the embodiments described herein. In addition, parts irrelevant to the description are omitted in the drawings in order to clearly describe the embodiments of the present invention. Similar parts are denoted by similar reference numerals throughout this specification.

Throughout this specification, when a first part is referred to as being "connected" to a second part, it includes being "directly connected" and "indirectly connected" via a third part. In addition, when a first component "includes" a second component, this does not exclude other components unless explicitly described otherwise, and other components may be further included.

Hereinafter, the embodiments of the present invention will be described in detail with reference to the accompanying drawings.

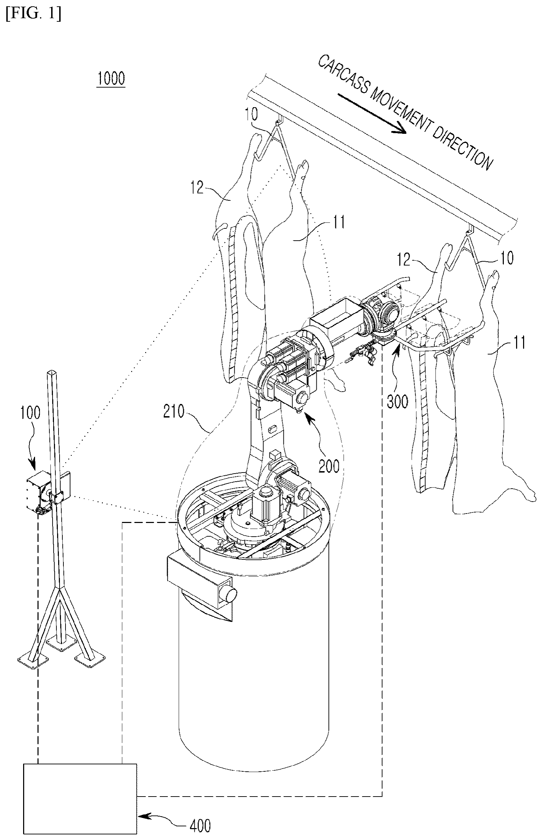

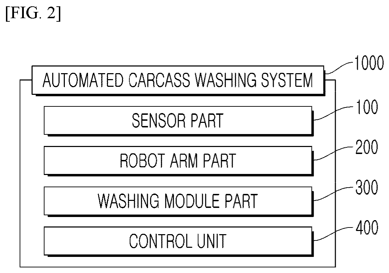

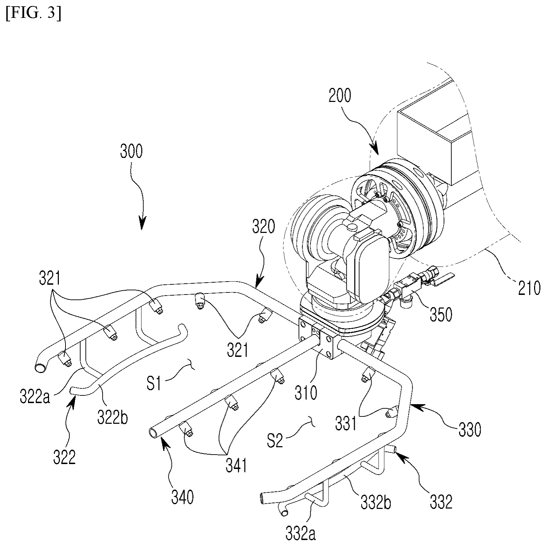

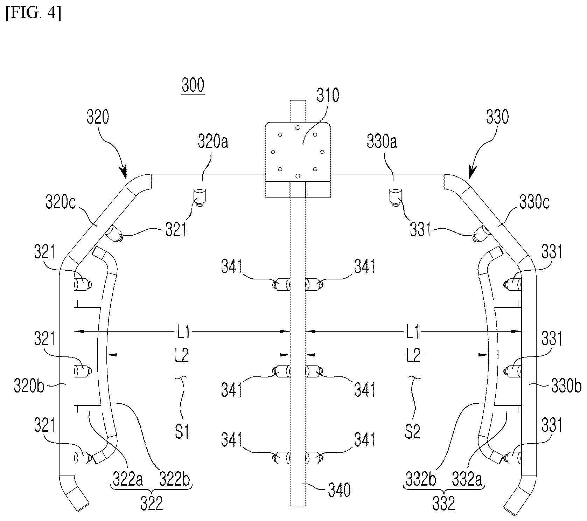

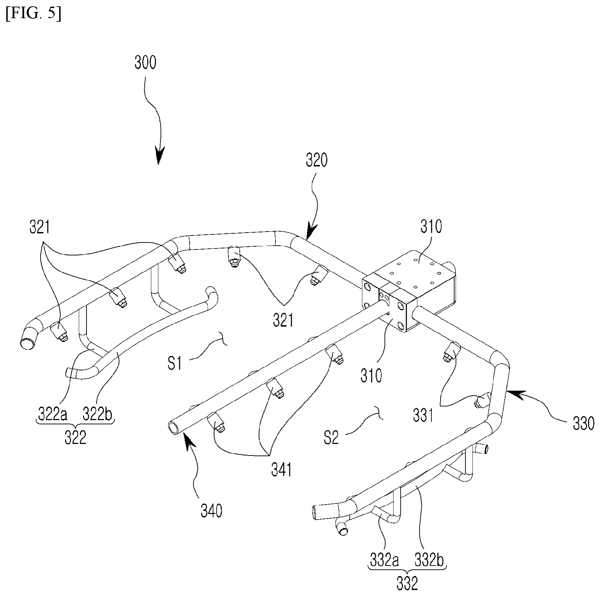

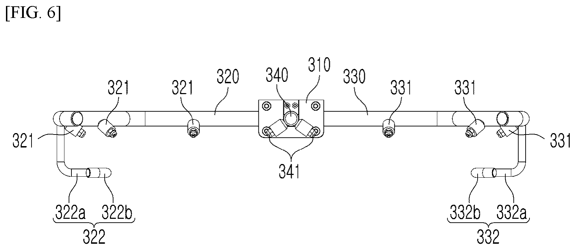

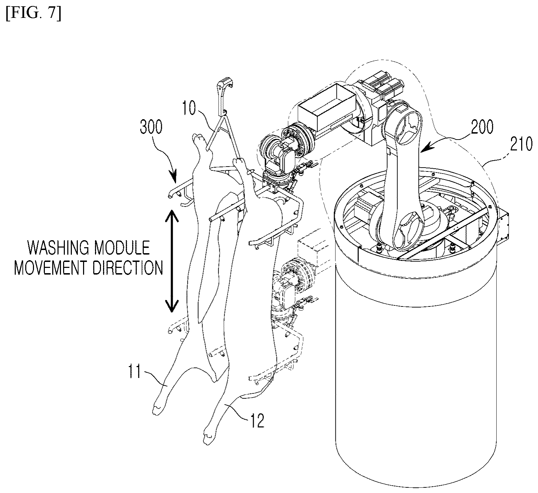

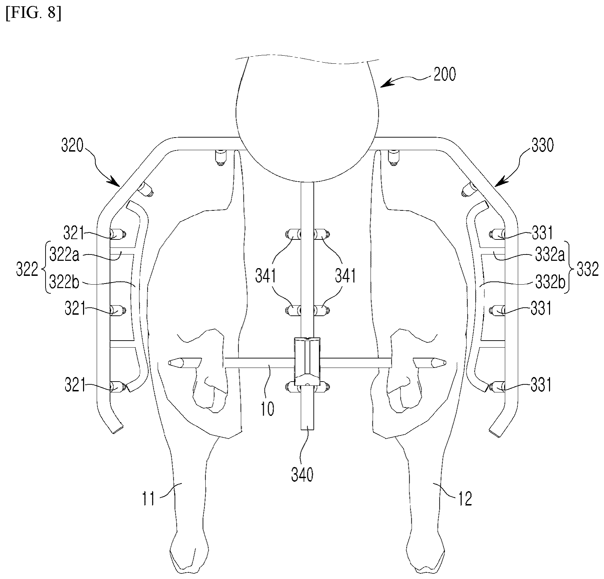

FIG. 1 is a perspective view illustrating an automated carcass washing system according to one embodiment of the present invention, and FIG. 2 is a block diagram illustrating the automated carcass washing system according to one embodiment of the present invention. FIG. 3 is a partially enlarged view illustrating the automated carcass washing system according to one embodiment of the present invention, and FIG. 4 is a plan view illustrating a washing module part according to one embodiment the present invention. FIG. 5 is a perspective view illustrating the washing module part according to one embodiment the present invention, and FIG. 6 is a front view illustrating the washing module part according to one embodiment the present invention. FIGS. 7 and 8 are views illustrating a use state of the automated carcass washing system according to one embodiment of the present invention.

Referring to FIGS. 1 to 8, an automated carcass washing system 1000 is formed to automatically wash carcasses bisected into a first carcass 11 and a second carcass 12.

In the present invention, although an example in which a carcass automatically washed by the automated carcass washing system 1000 is a pig will be described, the carcass automatically washed by the automated carcass washing system 1000 is not limited to the pig, and a washing operation may be performed on various carcasses such as a cow and the like.

The automated carcass washing system 1000 includes a sensor part 100, a robot arm part 200, a washing module part 300, and a control unit 400.

More specifically, the automated carcass washing system 1000 may include the sensor part 100 which detects bisected carcasses and collects scan information including sizes and curvatures of the bisected carcasses, the robot arm part 200 which moves along a movement path calculated on the basis of the scan information, the washing module part 300 including a plurality of washing nozzles 321, 331, and 341 which are connected to an end portion of the robot arm part 200, move along with the robot arm part 200, and spray washing water toward the bisected carcasses, and a control unit 400 which calculates the movement path of the robot arm part 200 and controls the movement of the robot arm part 200 and the spraying of the washing water of the washing module part 300 on the basis of the collected scan information.

In this case, the washing module part 300 automatically washes the first carcass 11 and the second carcass 12, which are hung on a hanger 10 and moved, while the washing module part 300 is connected to the robot arm part 200 and moved along the calculated path.

The sensor part 100 is formed to detect the bisected first carcass 11 and second carcass 12 which are hung on the hanger 10 and moved in front of the robot arm part 200 and the washing module part 300. The sensor part 100 is formed to detect the carcasses moving to washing positions, and collect the scan information such as the sizes and curvatures of the first carcass 11 and the second carcass 12.

The sensor part 100 may include one or more LiDAR scanners. That is, the sensor part 100 may check lengths, thicknesses, and the like of the bisected first carcass 11 and second carcass 12 using the LiDAR scanner, obtain depths based on the scanner to calculate a curvature and the like of spines, and provide the scan information to the control unit 400 such that the control unit 400 calculates the optimum movement path along which the robot arm part 200 and the washing module part 300 move. However, the sensor part 100 may include any device capable of generating two-dimensional or three-dimensional image data on sizes and shapes of the first carcass 11 and the second carcass 12 by scanning in addition to the LiDAR scanner.

The robot arm part 200 may be a multi-joint robot arm configured to move along the optimum movement path calculated on the basis of the scan information obtained from the sensor part 100.

In the robot arm part 200 with a multi-joint structure, as at least one arm rotates about a plurality of axes (as an example, five axes, six axes, seven axes, eight axes, or the like) in vertical and/or horizontal directions, the end portion of the robot arm part 200 may have a degree of freedom to move in an arbitrary direction, and/or to an arbitrary location. The washing module part 300 which sprays the washing water to the first carcass 11 and the second carcass 12 may be mounted on the end portion of the robot arm part 200, and the washing module part 300 may effectively wash the first carcass 11 and the second carcass 12 while moving along the optimum movement path without wasting the washing water.

The robot arm part 200 may include a waterproof cover 210 for preventing the washing water from being introduced into the apparatus during the washing process for the carcass. The waterproof cover 210 may generate a positive pressure in the apparatus to prevent penetration of steam and moisture, thereby maintaining an optimal condition of the durability of the robot arm part 200.

Meanwhile, the washing module part 300 includes a connecting part 310, a first washing part 320, a second washing part 330, and a central washing part 340.

More specifically, the washing module part 300 includes the connecting part 310 connected to the end portion of the robot arm part 200, the first washing part 320 extending from the connecting part 310 in one direction and including one or more washing nozzles 321, a second washing part 330 extending from the connecting part 310 in the other direction and including one or more washing nozzles 331, and the central washing part 340 extending from the connecting part 310 in a central direction and including one or more washing nozzles 341.

In this case, the first washing part 320 washes an outer surface of the first carcass 11, the second washing part 330 washes an outer surface of the second carcass 12, and the central washing part 340 washes inner surfaces of the first carcass 11 and the second carcass 12.

That is, the washing module part 300 is coupled to the robot arm part 200 which moves along the movement path calculated by the control unit 400 and configured to wash the outer surface and the inner surface of the first carcass 11 and the outer surface and the inner surface of the second carcass 12 at the same time while moving vertically.

Each of the first washing part 320, the second washing part 330, and the central washing part 340 may be formed in a pipe shape. The first washing part 320, the second washing part 330, and the central washing part 340 may be connected to a washing water supply pump (not shown) and may spray high-pressure washing water supplied from the washing water supply pump through the washing nozzles 321, 331, and 341.

Meanwhile, the first washing part 320 includes a first lateral washing pipe part 320a extending from the connecting part 310 in one direction and a first longitudinal washing pipe part 320b bent from one end of the first lateral washing pipe part 320a and disposed to face the central washing part 340. The first washing part 320 may further include a first connecting pipe part 320c which obliquely connects the first lateral washing pipe part 320a and the first longitudinal washing pipe part 320b in order to smoothly move the washing water. Each of the first lateral washing pipe part 320a, the first longitudinal washing pipe part 320b, and the first connecting pipe part 320c may include one or more washing nozzles 321 and spray the washing water toward the first carcass 11 in one or more directions.

In addition, the second washing part 330 includes a second lateral washing pipe part 330a extending from the connecting part 310 in the other direction and a second longitudinal washing pipe part 330b bent from one end of the second lateral washing pipe part 330a and disposed to face the central washing part 340. The second washing part 330 may further include a second connecting pipe part 330c which obliquely connects the second lateral washing pipe part 330a and the second longitudinal washing pipe part 330b in order to smoothly move the washing water. Each of the second lateral washing pipe part 330a, the second longitudinal washing pipe part 330b, and the second connecting pipe part 330c may include one or more washing nozzles 331 and spray the washing water toward the second carcass 12 in one or more directions.

The central washing part 340 is provided between the first washing part 320 and the second washing part 330. A first washing space S1 in which the first carcass 11 is positioned is formed between the first washing part 320 and the central washing part 340, and a second washing space S2 in which the second carcass 12 is positioned is formed between the second washing part 330 and the central washing part 340.

The central washing part 340 washes the inner surfaces of the first carcass 11 and the second carcass 12. That is, one or more washing nozzles 341 which spray the washing water toward the first carcass 11 are provided at one side of the central washing part 340, and one or more washing nozzles 341 which spray the washing water toward the second carcass 12 are provided at the other side. Accordingly, the washing nozzle 341 may be provided as a plurality of washing nozzles 341 to be spaced apart from each other in a longitudinal direction of the central washing part 340.

Meanwhile, the first washing part 320 may further include a first distancing guide 322.

More specifically, the first washing part 320 may further include the first distancing guide 322 which is coupled to the first longitudinal washing pipe part 320b and maintains a distance such that the first carcass 11 does not block an inlet of the washing nozzle 321 while reducing the movement of the first carcass 11 due to a washing repulsive force.

The first distancing guide 322 includes a first guide bar 322b and a first connecting bar 322a.

The first connecting bar 322a is formed to connect the first guide bar 322b and the first longitudinal washing pipe part 320b.

The first guide bar 322b is located to face the central washing part 340 and disposed to be closer to the central washing part 340 than the first longitudinal washing pipe part 320b. That is, a distance L1 between the first longitudinal washing pipe part 320b and the central washing part 340 may be greater than a distance L2 between the first guide bar 322b and the central washing part 340. The first guide bar 322b may prevent collision between the first longitudinal washing pipe part 320b and the first carcass 11 and prevent the washing nozzle 321 from being blocked by the first carcass 11 while guiding the first carcass 11 to enter the first washing space S1.

The first guide bar 322b may have a concavely curved shape corresponding to a bent outer surface of the first carcass 11.

Similarly, the second washing part 330 may further include a second distancing guide 332.

More specifically, the second washing part 330 may further include the second distancing guide 332 which is coupled to the second longitudinal washing pipe part 330b and maintains a distance such that the second carcass 12 does not block an inlet of the washing nozzle 331 while reducing the movement of the second carcass 12 due to a washing repulsive force.

The second distancing guide 332 includes a second guide bar 332b and a second connecting bar 332a.

The second connecting bar 332a is formed to connect the second guide bar 332b to the second longitudinal washing pipe part 330b.

The second guide bar 332b is located to face the central washing part 340 and disposed to be closer to the central washing part 340 than the second longitudinal washing pipe part 330b. That is, a distance L1 between the second longitudinal washing pipe part 330b and the central washing part 340 may be greater than a distance L2 between the second guide bar 332b and the central washing part 340. The second guide bar 332b may prevent collision between the second longitudinal washing pipe part 330b and the second carcass 12 and prevent the washing nozzle 331 from being blocked by the second carcass 12 while guiding the second carcass 12 to enter the second washing space S2.

The second guide bar 332b may have a concavely curved shape corresponding to a curved outer surface of the second carcass 12.

Meanwhile, the washing module part 300 may further include a pneumatic control valve 350, and the pneumatic control valve 350 may be controlled to be turned on/off in conjunction with the control unit 400 and the robot arm part 200.

The control unit 400 may calculate the optimum path along which the robot arm part 200 moves on the basis of the scan information provided from the sensor part 100 and control the movement of the robot arm part 200 and the spraying of the washing water of the washing module part 300. In addition, the washing module part 300 may spray the high-pressure washing water toward the first carcass 11 and the second carcass 12 while coupled to and moved with the end portion of the robot arm part 200. In other words, the washing module part 300 washes the first carcass 11 and the second carcass 12 while moving according to the sizes and curvatures of the first carcass 11 and the second carcass 12 on the basis of the scan information provided from the sensor part 100.

In the automated carcass washing system 1000 according to the present invention, the washing module part 300 including the first washing part 320, the second washing part 330, and the central washing part 340 may wash the bisected first carcass 11 and second carcass 12 at the same time, thereby significantly reducing a working time.

In addition, in the automated carcass washing system 1000, the washing module part 300 connected to the robot arm part 200 precisely washes the bisected first carcass 11 and second carcass 12 while moving along the optimum path, thereby reducing the waste of the washing water and securing uniform washing quality.

The above description of the present invention is only exemplary and may be understood by those skilled in the art that the invention may be easily changed into other concrete forms without changing the technological spirit and essential features. Therefore, the above-described embodiments should be considered as only examples in all aspects and not for purposes of limitation. For example, each component described as a single type may be implemented in a distributed manner, and similarly, components that are described as being distributed may be implemented in a coupled manner.

The scope of the present invention is defined by the appended claims and encompasses all modifications or alterations derived from meanings, the scope, and equivalents of the appended claims.

### Reference Numerals

1000: AUTOMATED CARCASS WASHING SYSTEM
100: SENSOR PART
200: ROBOT ARM PART
300: WASHING MODULE PART
310: CONNECTING PART
320: FIRST WASHING PART
320a: FIRST LATERAL WASHING PIPE PART
320b: FIRST LONGITUDINAL WASHING PIPE PART
320c: FIRST CONNECTING PIPE PART
321: WASHING NOZZLE
322: FIRST DISTANCING GUIDE
322a: FIRST CONNECTING BAR
322b: FIRST GUIDE BAR
330: SECOND WASHING PART
330a: SECOND LATERAL WASHING PIPE PART
330b: SECOND LONGITUDINAL WASHING PIPE PART
330c: SECOND CONNECTING PIPE PART
331: WASHING NOZZLE
332: SECOND DISTANCING GUIDE
332a: SECOND CONNECTING BAR
332b: SECOND GUIDE BAR
340: CENTRAL WASHING PART
341: WASHING NOZZLE
350: PNEUMATIC CONTROL VALVE
400: CONTROL UNIT
10: HANGER
11: FIRST CARCASS
12: SECOND CARCASS
S1: FIRST WASHING SPACE
S2: SECOND WASHING SPACE

## Claims

1. An automated carcass washing system which washes carcasses bisected into a first carcass and a second carcass and moved while hanging on a hanger, the automated carcass washing system comprising:
a sensor part which detects bisected carcasses and collects scan information including sizes and curvatures of the bisected carcasses;
a robot arm part which moves along a movement path calculated on the basis of the scan information;
a washing module part including a plurality of washing nozzles which are connected to an end portion of the robot arm part, move along with the robot arm part, and spray washing water toward the bisected carcasses; and
a control unit which calculates the movement path of the robot arm part on the basis of the collected scan information and controls movement of the robot arm part and spraying of the washing water of the washing module part.

2. The automated carcass washing system of claim 1, wherein the washing module part includes:
a connecting part connected to the end portion of the robot arm part;
a first washing part extending from the connecting part in one direction and including one or more washing nozzles;
a second washing part extending from the connecting part in the other direction and including one or more washing nozzles; and
a central washing part extending from the connecting part in a central direction and including one or more washing nozzles,
wherein the first washing part performs a washing operation on an outer surface of the first carcass,
the second washing part performs a washing operation on an outer surface of the second carcass, and
the central washing part performs a washing operation on inner surfaces of the first carcass and the second carcass.

3. The automated carcass washing system of claim 2, wherein:
the first washing part includes a first lateral washing pipe part extending from the connecting part in the one direction and a first longitudinal washing pipe part bent from one end of the first lateral washing pipe part and disposed to face the central washing part; and
the second washing part includes a second lateral washing pipe part extending from the connecting part in the other direction and a second longitudinal washing pipe part bent from one end of the second lateral washing pipe part and disposed to face the central washing part.

4. The automated carcass washing system of claim 3, wherein:
the first washing part further includes a first distancing guide which is coupled to the first longitudinal washing pipe part and maintains a distance such that the first carcass does not block an inlet of the washing nozzle while reducing movement of the first carcass due to a washing repulsive force; and
the second washing part further includes a second distancing guide which is coupled to the second longitudinal washing pipe part and maintains a distance such that the second carcass does not block an inlet of the washing nozzle while reducing movement of the second carcass due to a washing repulsive force.

5. The automated carcass washing system of claim 4, wherein:
a distance between the first longitudinal washing pipe part and the central washing part is greater than a distance between the first distancing guide and the central washing part; and
a distance between the second longitudinal washing pipe part and the central washing part is greater than a distance between the second distancing guide and the central washing part.

6. The automated carcass washing system of claim 1, wherein the robot arm part includes a waterproof cover which prevents the washing water from being introduced into an apparatus.

7. The automated carcass washing system of claim 3, wherein the washing module part is coupled to the robot arm part moving along the movement path calculated by the control unit and washes the outer surface and the inner surface of the first carcass and the outer surface and the inner surface of the second carcass at the same time while moving vertically.
